# EUROPEAN PATENT APPLICATION

(11) **EP 2 314 156 A1**
(43) Date of publication of application: **27.04.2011**
(21) Application number: 10396007.6
(22) Date of filing: 08.09.2010
(51) Int. Cl.: A01K 59/02

(54) **Method and apparatus for handling of honeycomb**

(30) Priority: 08.09.2009 FI 20090326
(71) Applicant: Nuutero, Juha, 37370 Narva (FI)
(72) Inventor: Nuutero, Juha, 37370 Narva (FI)
(74) Representative: Nieminen, Taisto Tapani

(57) **Abstract**

Apparatus (4) for handling a honeycomb equipped with a frame (1) for centrifugation of honey in which case the impact of the shell part (2) of the honeycomb preventing the centrifugation of the honey can be removed with the help of an apparatus (4). The apparatus comprises a tool (4) that can be moved above the shell part (2) of the honeycomb on the surface of which tool formed profiles (10) having a wedge form are adjusted to cut incisions (11) to the shell part (2) which incisions penetrate the shell part in order to ensure the outflow of the honey during the centrifugation.

## Description

The invention relates to a method and apparatus for handling a honeycomb equipped with a frame for centrifugation of honey in which case the impact of the shell part of the honeycomb preventing the centrifugation of the honey is removed with the help of an equipment belonging to the method in which case the honeycomb is ready to be centrifugalized.

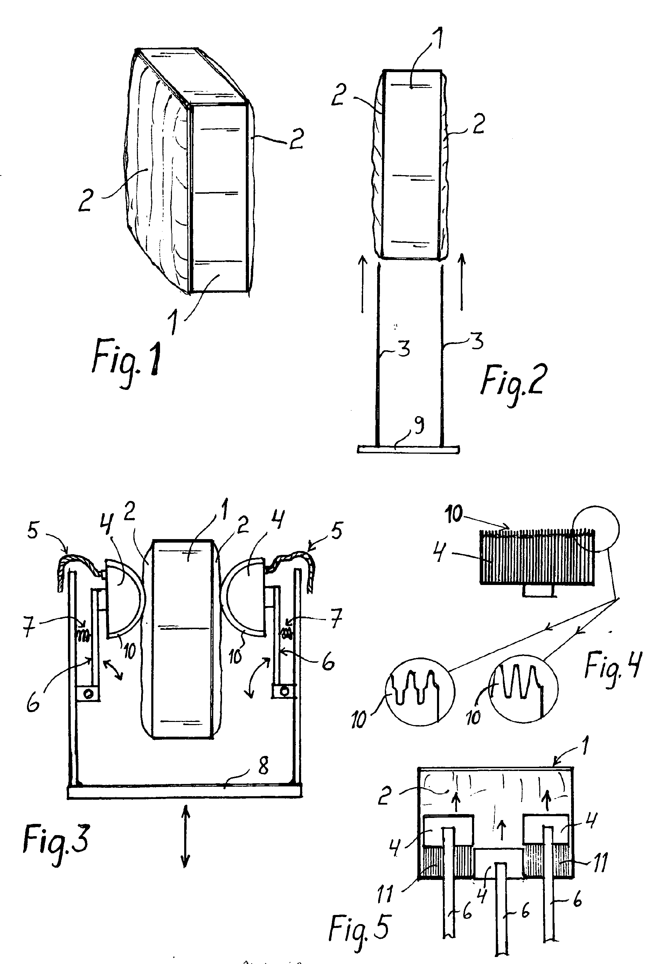

Previously a method for removing the shell part of the honeycomb shown by the figure 2 (prior art) is known in which method the shell parts made of beeswax and formed at the side surfaces of the honeycomb equipped with a frame slightly protruding from them are removed by cutting them away with a mechanical and a mechanized method with the help of blades 3.

This method removes the shell part that prevents the centrifugation but because of an uneven surface profile of the shell part the blades must be directed to move relatively deep underneath the surface of the shell part so that the shell part would become removed everywhere. This causes the disadvantage that also honey comes along during the removal of the shell part in which case separate machines are needed for the separation of the shell wax and the honey from each other which machines are expensive.

This invention solves a problem that relates to the fact that the honeycomb can be brought to be suitable for centrifugation and in which case the shell part will not become a problem, either. The above mentioned disadvantage can be solved with an equipment according to the invention and it is characteristic of the equipment that a tool that can be moved above the shell part of the honeycomb belongs to the equipment on the surface of which tool formed profiles having a wedge form are adjusted to cut incisions to the shell part which incisions penetrate the shell part in order to ensure the outflow of the honey during the centrifugation.

It is characteristic of the method according to the invention that a tool is moved above the shell part of the honeycomb on the surface of which tool formed profiles having a wedge form are adjusted to cut incisions to the shell part due to the moving which incisions penetrate the shell part in order to ensure the outflow of the honey during the centrifugation.

The advantage of the method and equipment according to the invention is the fact that even an uneven shell layer can be processed with the help of an equipment in such a way that the shell layer can stay at its place but it does not stop the centrifugation of the honey. In this method a route is opened for the honey out of each honeycomb when the incisions made to the shell layer are at the right density in which case the incision meets with each honey-comb. The shell layer does not get mixed with the honey but it stays at its place. It becomes removed not until after the centrifugation or it can be left at its place. At that time there is not significantly the actual honey being attached to it. When the incisions are made to the shell layer with the help of a heated tool, the shell layer recedes to the side when the wedge-shaped elements of the tool are being protruded to it and thus sufficient incisions in relation to the removal of the honey are created to the shell layer.

In the following the invention is explained more detailed by referring to the accompanying drawings in which
Figure 1 shows a honeycomb diagonally seen.
Figure 2 shows the removal of the shell layer in a previously known way. (Prior art)
Figure 3 shows a handling method of a honeycomb according to the invention.
Figure 4 shows a tool as a side view and its alternative structures as an enlargement.
Figure 5 shows tools adjusted interlocked when the shell layer is being handled.

In the figure 1 a conventional honeycomb cassette equipped with a frame 1 is shown in which honeycomb cassette there is honey inside it in honeycombs and bees have also created a shell layer 2 from beeswax at the honeycomb sides of the cassette which shell layer protrudes indeterminately from the side level defined by the frame 1. The shell layer 2 does not contain honey that could be utilized.

In the figure 2 a known removal of the shell layer 2 with the help of blades is shown. The removal is performed at the same time at the both sides. The shell layer 2 and honey, too, will come off during the removal because the blades 3 must be adjusted to move according to the lowest point of the shell layer. The honey that has come off along the shell layer 2 must be separated from the wax with a wax centrifuge or a separator.

In the figure 3 a handling method of a honeycomb according to the invention is shown as a side view in which handling method the shell layers 2 of the honeycomb cassette located at the both sides are being handled at the same time with the help of tools 4 by moving the tools 4 above the shell layers. The tools 4 can be attached with articulated arms 6 to the equipment body 8 in which case they run along the surface of the shell layer. A sufficient sag of the tools 4 to the shell layer 2 can be ensured with spring loadings which spring loadings are shown by coil springs 7 that are described diagrammatically. The heating of the tools to a certain temperature, such as to 90°, eases the sag of the tools 4 to a shell layer 2 with the help of electric resistances or, such as in the figure 3, with the help of a liquid circulation heating along pipings 5. The movement of the tools 4 can be performed in relation to the honey cassette that stays at its place or alternatively the equipment body 8 stays at is place and the honey cassette is moved down and up.

Figure 4 shows a non rotating tool 4 that can be moved in relation to the shell layer 2 with which tool the needed incisions are made to the shell layer 2. The tool 4 is a cut half of a cylinder and there are wedge-shaped ridges 10 at its outer surface as elements with which the incisions are created. Due to a round form the tool moves on the surface of the shell layer 2 making incisions even when it is not rotating. The wedge-shaped ridges 10 can have various shapes. The enlargement pictures show two examples of these. The tool 4 must not be pressed too deeply into the shell layer 2. The height of the wedge-shaped ridges 10 starts to resist the sag of the tool when it has been pressed as much as the height of the ridge is. The wedge-shaped or alike ridge form in the tool 4 is advantageous regarding the creating of the incision when it forms the incisions of the shell layer 2 and does not attempt to break the shell layer 2.

Alternatively the tool 4 can be a rotating roll or a reel on the surface of which there are corresponding wedge-shaped ridges 10. Also the surface comprising the wedge-shaped ridges of the tool can be curved, for example a part of a ellipse in which case it does not have a standard radius.

In the figure 5 the moving of the tools 4 is shown on the surface of the shell layer 2 of the honey cassette. The incision areas 11 become created after two tools 4 that move in front. The third tool 4 is located interlocked in relation to the previous tools in which case the whole area becomes filled with incisions. The tools 4 are adjusted accurately to move interlocked so that a coherent area 11 comprising incisions can be achieved to the shell layer 2. By reducing the tool size their number and interlacing can correspondingly be increased and they can be made to follow the surface profiles more accurately.

## Claims

1. Apparatus (4) for handling a honeycomb equipped with a frame (1) for centrifugation of honey in which case the impact of the shell part (2) of the honeycomb preventing the centrifugation of the honey can be removed with the help of an apparatus (4), **characterized in that** the apparatus comprises a tool (4) that can be moved above the shell part (2) of the honeycomb on the surface of which tool formed profiles (10) having a wedge form are adjusted to cut incisions (11) to the shell part (2) which incisions penetrate the shell part in order to ensure the outflow of the honey during the centrifugation.

2. Apparatus (4) according to the claim 1, **characterized in that** the attachment of the moveable tool (4) to the apparatus body (8) is springy, such as spring-loaded (7).

3. Apparatus (4) according to the claim 1, **characterized in that** the moveable tool (4) is heated either with the help of a electric resistance or with the help of a heating liquid circulation (5).

4. Apparatus (4) according to the claim 1, **characterized in that** there are several tools (4) at the apparatus body (8) and they are located interlocked.

5. Apparatus (4) according to the claim 1, **characterized in that** the tool is a non rotating tool (4) that can be pulled/pushed above the shell part (2) or it is a rotating roll.

6. Method for handling a honeycomb equipped with a frame (1) for centrifugation of the honey in which case the impact of the shell part (2) of the honeycomb preventing the centrifugation of the honey is removed with the help of an apparatus (4) belonging to the method, **characterized in that** a tool (4) is moved above the shell part (2) of the honey-comb on the surface of which tool formed profiles (10) that have a wedge form are adjusted to cut incisions (11) to the shell part (2) due to moving which incisions penetrate the shell part in order to ensure the outflow of the honey during the centrifugation.

7. Method according to the claim 6, **characterized in that** a heated tool (4) is used in the method.

8. Method according to the claim 6, **characterized in that** the handling is performed by pulling/pushing a non rotating tool (4) or a rotating roll over the shell part (2).
